# DEMANDE DE BREVET EUROPEEN

(11) **EP 2 497 684 A1**
(43) Date de publication de la demande: **12.09.2012**
(21) Numéro de dépôt: 12159031.9
(22) Date de dépôt: 12.03.2012
(51) Int. Cl.: B60P 1/36, A01C 3/06

(54) **Remorque de transport a dechargement par tapis enrouleur**

(30) Priorité: 10.03.2011 BE 201100155
(71) Demandeur: Ets JOSKIN S.A., 4630 Soumagne (BE)
(72) Inventeur: Joskin, Victor, B-4633 MELEN (BE)
(74) Mandataire: pronovem

(57) **Abrégé**

Dispositif de déchargement (1) intégrable à un véhicule de transport, comprenant un chevalet tridimensionnel (19) de guidage et maintien de la paroi mobile (6), disposé sur le côté de la paroi mobile (6) non exposé à la charge transportée, ledit chevalet (19) comportant une base s'écartant sur une certaine distance en direction opposée à la paroi mobile (6), s'étendant à la base de la paroi mobile (6) sur une certaine largeur et muni de moyens de guidage (20, 21, 22, 23, 24) sur la structure de fond de caisse (7), lesdits moyens de guidage comprenant une pluralité de roulettes (21, 22), patins ou ergots, le tapis de fond et lesdits moyens de guidage sur déplaçant sur la surface de glissement constituée par le fond de caisse (7).

## Description

### Objet de l'invention

La présente invention concerne un dispositif de déchargement pour toute caisse de transport de produit en vrac ou en conditionnement, placée de manière fixe ou démontable sur une structure munie d'un train roulant généralement quelconque (pour route, hors route, chemin de fer, etc.), et dotée d'une bande transporteuse de fond et d'une paroi mobile. Celle-ci est de préférence frontale, accompagnant la matière transportée lors de son déchargement par une baie de déchargement réalisée par un dispositif quelconque d'ouverture de la paroi opposée, de préférence arrière, de la caisse de transport.

### Etat de la technique

On connaît déjà différents dispositifs de déchargement de caisse de transport dans lesquels, au lieu de basculer la caisse pour la vider, une paroi frontale actionnée par un mécanisme commandé à distance permet de pousser la matière transportée vers la baie de déchargement arrière. Pareils dispositifs sont décrits dans les documents US 5 273 390 A, EP 0 992 396 A2, EP 1 364 828 A2 et A3, EP 1 609 668 B1, GB 2 372 932 A et GB 2 399 267 A. EP 1 645 462 A2 décrit en outre comment pareil dispositif peut s'accommoder d'une architecture de caisse dans laquelle les parois latérales sont plus écartées l'une de l'autre à l'arrière qu'à l'avant (caisse conique).

Les remorques non basculantes auxquelles se réfèrent les documents précités intéressent de plus en plus les utilisateurs du fait :
- qu'elles peuvent être de fabrication plus légère puisque leur charge n'est jamais focalisée sur un seul point de la structure de caisse (a contrario, les caisses basculantes font supporter toute leur masse par le point d'ancrage du vérin lors de la levée de la caisse) ; ce que recherche l'utilisateur dans ce type de remorque, c'est une charge utile maximalisée, donc une masse de structure minimale afin de pouvoir transporter le plus possible de matière à chaque trajet ;
- qu'elles sont plus stables au déchargement puisque leur centre de gravité reste beaucoup plus bas que celui d'une remorque basculante avec caisse levée ; ce paramètre est un aspect crucial sur terrain instable ou chaotique comme les chantiers de construction ou d'extraction, les silos de conservation dans l'agriculture, etc., d'autant que l'évolution de la puissance des engins de traction s'est traduite par un accroissement impressionnant du volume des remorques ;
- qu'elles permettent de décharger directement sous des structures de hauteur plus faible, tels que des auvents de déchargement, des entrepôts de stockage, des ponts et tunnels, etc.;
- qu'elles peuvent être équipées de dispositifs complémentaires tels qu'un système d'épandage de fumier, un système transbordeur, etc. ; un tel dispositif modifie la destination de la remorque en ce qu'il en complète l'usage ; dès lors, la polyvalence de la remorque augmente, donc sa productivité s'accroît et la rentabilité de son exploitant s'en trouve favorisée.

Comme l'indique la succession des documents susmentionnés, le dispositif développé à travers ces diverses solutions successives souffre de différentes difficultés.

Primo, puisque c'est la paroi frontale qui pousse la matière pour la décharger, le dispositif d'action de la paroi mobile doit disposer d'une puissance importante, laquelle nécessite une lourde superstructure de maintien.

Secundo, la distance à parcourir par la dite paroi frontale implique que le système de poussée parcourt le même chemin; il en résulte un dispositif relativement coûteux et/ou complexe constitué par exemple d'un ou plusieurs vérins - hydraulique(s) ou autre(s) - de longueur exceptionnelle, d'un embiellage alambiqué pour obtenir la distance avec un vérin court, d'un dédoublement du dispositif entraînant une même réaction des coûts, d'un dispositif à crémaillère ou à cliquet peu compatible avec le but de rapidité et de continuité recherché ou d'un dispositif de vis sans fin également coûteux et pouvant entraîner un déséquilibre de la paroi poussante.

Tertio, le dispositif de poussée de la paroi implique généralement une structure frontale empiétant plus ou moins largement à la fois sur le volume de la caisse, d'où perte de volume utile pour le transport, et sur l'attelage de la remorque, d'où nécessité d'allonger le timon, ce qui affecte négativement le rayon de braquage de la remorque et le ripage des pneus à cause de l'effet traînant.

Quarto, la matière à décharger exerce une résistance très importante sur la paroi destinée à la pousser vers l'extérieur ; il en résulte un possible déséquilibre vertical de la dite paroi et, surtout, un risque de blocage bien réel si la masse transportée refuse de bouger à cause de son compactage ou de son collage à la caisse ; cette problématique a mené au développement de parois poussantes obliques, bientôt prolongées à leur base d'un plateau positionné sous la première section de la masse transportée, sorte de véritable fausse caisse dans la caisse. Ici encore, on devine les inconvénients de coût et de poids que pareilles solutions entraînent, risquant de contrebalancer exagérément l'avantage de stabilité au déchargement, de possibilité de compression de la matière et de simplicité technique de construction offerts par ce type de caisse de transport et par les remorques qui l'utilisent.

Quinto, les dispositifs mécaniques complexes mis en oeuvre dans ces solutions sont synonymes de masse relativement importante. Ceci est contraire au but premier recherché par ce type de remorques : une tare minimale pour une capacité de charge maximale. La complexité du dispositif de poussée contraint de réaliser une structure de poussée dont la masse remplace celle gagnée sur la structure générale de la caisse et/ou de la remorque.

Sexto, les caisses de transport dont la paroi opposée à la baie de déchargement est mobile s'accommodent très mal d'un accès pratiqué dans une des parois latérales, à des fins de maintenance, entretien ou autres, parce que la paroi mobile doit épouser parfaitement les contours des parois latérales. Pareil accès revêt pourtant une grande importance lorsque l'extrémité de la caisse située du côté de la baie de déchargement est entravée par un dispositif quelconque, par exemple de distribution : rouleaux démêleurs d'épandeur de fumier, turbine de paillage ou d'affouragement, dispositif d'épandage de sel et/ou sable, etc.

Parallèlement, on connaît aussi d'autres dispositifs de caisse de transport dans lesquels le déchargement est effectué par une sorte de tapis roulant, soit sectionnel, soit continu, tournant sans fin autour de la structure de fond de caisse et entraînant avec lui la matière à décharger. Pareils dispositifs sont décrits dans les documents US 4 055 265 A, US 4 741 431 A, US 5 102 285 A et US 7 293 640 B1.

En outre, la documentation commerciale Krampe Bandit illustre une caisse de transport comportant un tapis de fond qui s'enroule successivement sur un tambour avant et un tambour arrière afin soit de déplacer la charge vers l'arrière de la caisse pour le déchargement, soit vers l'avant de la caisse pour le chargement par la baie arrière.

Il saute aux yeux que les constructions sectionnelles nécessitent des techniques de fabrication, de maintien, de nettoyage et d'enroulement coûteuses. Mais surtout on constate que chacune de ces solutions requiert une superstructure de caisse comportant un double châssis de base et que la matière transportée colmate très fréquemment à l'intérieur du tapis roulant et/ou du double châssis, d'autant plus lorsque cette matière est friable et/ou collante. C'est le cas notamment de la terre, de l'ensilage de maïs ou d'herbe, de la chaux, etc. Enfin, la paroi opposée à la baie de déchargement étant fixe, la matière transportée aura tendance à retomber du côté opposé à la baie de déchargement au cours du déchargement, allongeant de ce fait le temps de déchargement, d'où une certaine perte de productivité - donc de rentabilité - et de régularité de déchargement pour l'utilisateur.

Ce défaut caractérise aussi le fond roulant installé dans la caisse des remorques de transport Krampe Bandit, même si celles-ci font l'économie d'un double châssis. Outre l'inconvénient de la retombée de charge vers l'avant de la caisse au cours du processus de déchargement, ces remorques pêchent par le risque de se retrouver dans l'impossibilité de décharger lorsque l'opérateur aurait omis d'enrouler le tapis de fond à l'avant afin de lui laisser de la matière à enrouler à l'arrière pour le déchargement : si la caisse est chargée alors que le tapis est (quasi) complètement enroulé sur le tambour arrière, il est impossible de décharger autrement qu'à la main. Le même risque existe pour le chargement en procédure inverse. Pareil risque ne doit pas être négligé car les chauffeurs de remorques à fond mouvant ne sont nullement habitués à devoir commander la remise en position du fond mouvant après déchargement, pareil fond se mouvant habituellement de manière continue autour du fond de caisse.

Il a déjà été tenté d'éliminer le défaut de retombée de la matière vers le côté opposé à la baie de déchargement au cours de la phase de déchargement en prévoyant une paroi mobile liée aux chaînes de convoyage d'un épandeur de fumier. Une telle paroi était aussi chargée de « racler » le fond de caisse au déchargement. Cette réalisation a été considérée comme insuffisante dans la pratique parce que la cloison, non étanche, laissait passer des résidus de fumier qui pouvaient dès lors tomber à terre pendant le transport, ou qui se collaient au fond et finissaient par gêner voire entraver le déplacement des chaînes de fond et de la cloison elle-même. Cette réalisation était aussi insuffisante parce que le dispositif de maintien de la porte n'était soit pas satisfaisant et la cloison finissait par s'endommager, soit trop encombrant et il fallait sacrifier une partie de la longueur utile de caisse pour garantir la rotation des chaînes, soit trop coûteux à réaliser et la machine s'en trouvait invendable. Notons en outre que ces réalisations conservaient un dispositif de chaînes de fond tournant en continu autour de la structure de fond de caisse, ce qui posait en outre la difficulté d'arrêter la rotation des chaînes avant que la cloison ne se mette à tourner elle aussi à l'extrémité de la caisse de transport.

Enfin, il faut relever que toutes ces réalisations nécessitent une longueur de tapis supérieure au double de la longueur de la caisse, ce qui, vu le prix élevé du type de tapis nécessaire, représente un coût proportionnellement très important dans la construction de la caisse. A ce surcoût s'ajoute encore, pour la réalisation Krampe Bandit, celui lié à la conception et la construction de dispositifs d'enroulement avant et arrière très volumineux, une caractéristique qui pose en outre une difficulté constructive majeure en termes de complexité du châssis porteur (surtout du côté de l'attelage de la remorque) et/ou de hauteur du plateau de chargement.

Le document US 3,498,482 divulgue une caisse de chargement en vrac pour camion, muni d'une paroi frontale mobile vers l'arrière et un tapis de fond pour le déchargement à une baie arrière de la caisse. La première extrémité du tapis de fond, à l'avant de la caisse, est solidaire de la paroi mobile et l'autre extrémité est attachée à un tambour enrouleur entraîné de manière réversible par une unité de puissance et situé sous la baie de déchargement. Côté opposé à l'espace de chargement, la paroi mobile est munie d'un chevalet de maintien qui supporte un treuil duquel est déroulé un câble, attaché à la paroi mobile, lors du déchargement. Pour le retour de la paroi mobile à sa position initiale, le câble est réenroulé sur le treuil, via une seconde unité de puissance. Les problèmes de friction entre le tapis de fond mobile et la structure fixe de fond de caisse sont pris en charge par la création d'un coussin d'air entre ces derniers. L'étanchéité ainsi que le guidage du tapis roulant sont assurés par des joints longitudinaux disposés le long des parois latérales.

Le document US 4,747,747 divulgue un système similaire à tapis roulant pour remorque de chargement en vrac, comprenant une structure support constituée de traverses et longerons, un tapis flexible sans fin, deux roues d'extrémité et une paroi mobile. Les roues sont dentées et coopèrent avec des orifices régulièrement disposés aux deux rives du tapis roulant, ce qui permet le guidage du tapis roulant. En cas de charge importante se pose le problème de la friction entre le cadre support et le tapis roulant. Une première solution est de polir la surface de contact du cadre avec le tapis roulant. Une autre solution est d'équiper la structure support de roulettes régulièrement espacées. La paroi mobile est constituée d'un cadre renforcé recouvert d'une tôle métallique. Le cadre est attaché au tapis roulant par des rivets. Le maintien de la position orthogonale de la paroi mobile par rapport au tapis roulant est assuré par des montants obliques situés du côté de l'espace de chargement.

Dans le document GB 108,393, on décrit une caisse de déchargement d'un véhicule à moteur, comprenant une plateforme mobile, un tambour enrouleur situé sous la baie arrière de déchargement et des moyens d'enroulement associés, un tambour permettant le retour de la plateforme mobile à sa position initiale, ledit tambour étant relié à la plateforme mobile par un câble ou des cordes. La plateforme est associée, à son extrémité initialement opposée à la baie de déchargement, à une paroi verticale. Il n'y a pas de chevalet ou autres moyens pour le maintien de la paroi verticale. La plateforme mobile est supportée et guidée par une pluralité de rouleaux qui sont montés dans des glissières longitudinales montées dans le fond de caisse.

### Buts de l'invention

Dès lors, l'invention poursuit les buts suivants, ensemble ou séparément :
- proposer un dispositif de déchargement de caisse de transport à la fois souple, rapide, régulier et continu, qui ne comprime pas la matière transportée au cours du processus de déchargement, qui évite son propre encrassement, qui se contente d'une structure de caisse et de fond de caisse relativement légère éliminant tout poids superflu, sans nécessité de dédoubler ou surélever le fond, en sorte que le centre de gravité de la caisse et de son engin porteur soit maintenu le plus bas possible, qui nécessite une puissance d'actionnement relativement faible, qui soit de construction compacte, limitant autant que possible la saillie d'élément constructifs et qui empêche le chargement de la caisse lorsque le dispositif de déchargement est dans une position défavorable ;
- proposer un dispositif de déchargement qui amortisse le chargement en vrac des matières fragiles ;
- proposer un dispositif de déchargement facilitant le nettoyage de l'intérieur de la caisse de chargement soit facilité, notamment en ce qui concerne l'évacuation des matières résiduelles et du liquide auxiliaire, le plus souvent de l'eau, servant à favoriser cette évacuation ;
- proposer un dispositif de déchargement guidant et maintenant la paroi mobile dans son déplacement vers la baie de déchargement, sans utiliser les parois latérales de la caisse qui peuvent se déformer, tout en empêchant les oscillations de la paroi mobile et en centrant l'enroulement du tapis de fond ;
- proposer un dispositif de déchargement pouvant s'accommoder d'une caisse dont les parois latérales seraient déformées ou d'une caisse dite « conique », c'est-à-dire dont l'écartement des parois latérales est plus important du côté de la baie de déchargement que du côté opposé, ce qui permet à la matière transportée de se décompacter au cours de son trajet vers la baie de déchargement.

L'invention a encore pour but dépendant de permettre un abattement partiel de la paroi située du côté du véhicule de traction de la remorque pour les situations où un engin précédant le convoi projette de la matière dans la remorque par dessus son véhicule de traction.

L'invention a encore pour but dépendant de permettre un réglage, fin et régulier sur toute la longueur de caisse, de la vitesse de déplacement du tapis de fond, pour réguler le déchargement de la matière transportée, par exemple pour un épandage uniforme ou pour l'approvisionnement d'un dispositif de déchargement complémentaire éventuel.

L'invention a enfin pour but dépendant de permettre l'accès à l'intérieur de la caisse de transport par un accès autre que la baie de déchargement et sans devoir franchir la hauteur de la caisse.

### Principaux éléments caractéristiques de l'invention

Les objectifs précités sont atteints selon la présente invention en mettant en oeuvre un dispositif de déchargement, intégrable à un véhicule de transport principalement destiné aux matières en vrac, comprenant une caisse de chargement, démontable ou non, une structure de fond de caisse, des parois latérales avantageusement réalisées en partie en matière synthétique pour un gain de masse, une baie de déchargement optionnellement munie d'un dispositif obturateur quelconque (panneau ou volet mobile, au moins une porte battante, caisson basculant, etc.), et mettant en oeuvre :
- une paroi mobile rigide, perpendiculaire aux parois latérales et apte à se déplacer, lors du déchargement, d'une extrémité de la caisse opposée à la baie de déchargement (position initiale) vers cette dernière (position finale) ;
- un tapis de fond essentiellement hermétique, uniforme, en matière souple, de préférence synthétique et dotée d'une haute résistance, et de longueur inférieure au double de la longueur utile comprise entre la baie de déchargement et ladite extrémité opposée ;
- une première extrémité du tapis de fond opposée à la baie de déchargement étant solidaire de la paroi mobile, une seconde extrémité de celui-ci étant attachée à un tambour enrouleur disposé sous la baie de déchargement, le tambour enrouleur étant entraîné par un système de puissance permettant un enroulement réversible, c'est-à-dire dans les deux sens de rotation, du tapis de fond avec déplacement concomitant de la paroi mobile qui lui est solidaire, entre ladite extrémité opposée et la baie de déchargement, un dispositif de rappel du tapis de fond permettant en outre de ramener ensuite celui-ci vers ladite extrémité opposée.

Le dispositif de déchargement selon l'invention est caractérisé en ce qu'il comprend un chevalet tridimensionnel de guidage et maintien de la paroi mobile, disposé sur le côté de la paroi mobile non exposé à la charge transportée, ledit chevalet comportant une base s'écartant sur une certaine distance en direction opposée à la paroi mobile, s'étendant à la base de la paroi mobile sur une certaine largeur et munie de moyens de guidage sur la structure de fond de caisse, lesdits moyens de guidage comprenant une pluralité de roulettes, patins ou ergots, le tapis de fond et les moyens de guidage pouvant se déplacer sur la surface de glissement constituée par le fond de caisse.

L'avantage d'accrocher la paroi mobile au tapis de fond, selon l'invention, est double :
1. empêcher la matière de retomber vers l'espace vidé pendant le déchargement, ce qui allonge le temps de déchargement et la longueur de tapis nécessaire et
2. comme corolaire direct, permettre de limiter la longueur du tapis au strict nécessaire, c'est-à-dire la longueur de la caisse augmentée de ce qui est nécessaire pour l'accrocher au tambour enrouleur.

Le déchargement se produit lorsque le système de puissance enroule le tapis de fond sur le tambour enrouleur, ledit tapis entraînant avec lui la paroi mobile qui lui est solidaire et qui accompagne de manière concomitante les matières vers la baie de déchargement ou un dispositif de déchargement secondaire complétant le dispositif d'obturation de celle-ci.

La mise en oeuvre de l'invention permet, dans le cas d'une structure de fond de caisse légère et ouverte et malgré celle-ci, à l'aide d'une puissance relativement limitée, de déplacer la matière de manière souple, rapide, régulière et continue sans la comprimer, parce que le tapis qui la supporte et la paroi qui l'accompagne glissent aisément et bien en ligne.

Un avantage complémentaire réside dans le fait que l'espace de chargement est parfaitement vidé au déchargement grâce au déplacement de la paroi mobile et à la présence d'un racloir de tambour enrouleur, tous résidus éventuels tombant au sol à travers la structure du fond de caisse ouverte.

En outre, évidemment, aucun opérateur ne procèdera au chargement de la caisse s'il voit la paroi mobile dans une position défavorable, ce signal visuel étant aussi évident qu'une caisse de benne levée.

Des modes d'exécution particuliers comprennent en outre notamment les caractéristiques complémentaires suivantes, ensemble ou séparément :
- la structure de fond de caisse est une structure à claire-voie ne comportant pas de couverture autre que le tapis de fond et comprenant, dans sa partie supérieure, des lattes longitudinales faisant office de surface de glissement, la combinaison du fond de caisse à claire-voie et du tapis souple amortissant les matières déversées au chargement ;
- les lattes du fond de caisse supportent des glissières réalisées en matière synthétique autolubrifiante, sur lesquelles peuvent se déplacer le tapis de fond et les roulettes, patins ou ergots ;
- la surface de glissement du fond de caisse est constituée de lattes profilées dont les plis sont en arc de cercle et de glissières souples d'une largeur supérieure aux lattes ;
- la matière synthétique autolubrifiante est le nylon, de préférence de type Ertalon® ;
- les roulettes sont en position supérieure par rapport à la structure de fond de caisse et se déplacent sur les glissières synthétiques supérieures ;
- le tapis de fond est réalisé d'une seule pièce ou de manière sectionnelle ;
- le chevalet tridimensionnel s'étend de manière éloignée de la paroi pour maintenir la partie supérieure de celle-ci avec un angle d'appui ;
- l'extrémité de la structure de fond de caisse se trouvant sous la baie de déchargement est pourvue d'un tambour de renvoi placé en rotation libre sur un arbre situé dans le prolongement de ladite structure de fond, en sorte que le tapis de fond circule à l'angle formé par les arêtes d'extrémité de ladite structure de fond, un support placé sous le tambour de renvoi comportant un racloir destiné à évacuer tout résidu de charge transportée par le tapis de fond avant son enroulement sur le tambour ;
- le dispositif de rappel du tapis de fond comprend un treuil à câble ou tout autre lien de traction, également actionné par un ou plusieurs systèmes de puissance ;
- afin de s'accommoder d'une géométrie de caisse conique ou d'une déformation des parois latérales, la paroi mobile est garnie de joints synthétiques verticaux semi-souples assurant l'étanchéité de la caisse le long des parois latérales de caisse, quelle que soit la position de la paroi mobile, donc y compris si l'écart des parois latérales est irrégulier ou diffère sur la longueur de caisse ;
- l'enroulement du tapis de fond est successivement actionné et stoppé au moyen d'un dispositif de commutation du système de puissance ;
- afin de régler avec précision la vitesse d'enroulement du tapis et la longueur de tapis déroulée, le système de puissance du tambour enrouleur peut être muni d'un dispositif de régulation de la puissance, ce qui sera utile pour les applications avec dispositif de déchargement secondaire ;
- afin de permettre l'abattement partiel de la paroi mobile, sa partie supérieure peut être montée sur charnières et basculée au moyen d'un dispositif de puissance quelconque, éventuellement assisté d'un mécanisme à compas ;
- afin de réserver un accès aisé à l'intérieur de la caisse par un moyen autre que la baie de déchargement, une trappe d'accès peut être ménagée dans la paroi mobile ;
- afin d'augmenter la polyvalence de la remorque, le dispositif d'obturation de la baie de déchargement peut être complété ou remplacé par un dispositif de déchargement secondaire spécifique en fonction de la matière transportée : système de rouleaux, avec ou sans assiettes d'épandage, pour la distribution de fumiers, sables, chaux, et autres matières à structure granuleuse ; convoyeur de transbordement pour récoltes de produits agricoles et autres ; turbine de projection pour distribution de fourrage ou déchets verts compostés ; etc.

### Brève description des figures

Des exemples de réalisation suivant l'invention sont décrits par la suite avec plus de détails à l'aide des figures annexées.

La Figure 1 montre une vue générale d'une caisse de transport selon l'invention, montée sur un châssis muni d'un train roulant ; dans cet exemple de réalisation, la paroi mobile est la paroi avant et la baie de déchargement est obturée au moyen d'un caisson basculant ; dans la situation représentée, le tapis de fond se trouve en position complètement déroulée et la paroi mobile se trouve en position frontale, la caisse étant ainsi prête à recevoir son chargement.

La Figure 2 montre une vue générale de la même caisse de transport selon l'invention, en situation prête pour le déchargement, la baie de déchargement arrière ayant été dégagée par ouverture du caisson basculant.

Les Figures 3 et 4 montrent le détail d'un dispositif d'enroulement du tapis de fond d'une caisse de transport selon l'invention.

La Figure 5 montre la même caisse de transport selon l'invention, pendant le processus de déchargement, la paroi mobile étant tirée vers l'arrière en même temps que la charge par l'enroulement du tapis de fond.

La Figure 6 montre la même caisse de transport selon l'invention, une fois le processus de déchargement accompli, la paroi mobile étant positionnée tout à l'arrière et le tapis de fond étant complètement enroulé.

La Figure 7 montre une vue globale d'une paroi mobile de caisse de transport selon l'invention.

Les Figures 8 et 9 montrent une vue de détail d'un dispositif de glissement, de maintien et d'accrochage au tapis d'une paroi mobile de caisse de transport selon l'invention.

La Figure 10 montre une vue de détail d'un dispositif de guidage et de maintien de la paroi mobile selon une modalité préférée de l'invention, grâce à un chevalet tridimensionnel muni de roulettes de guidage sur la structure de fond de caisse, en combinaison avec des glissières en nylon, de préférence de type Ertalon®..

La Figure 11 montre une vue d'un dispositif de rappel de tapis enrouleur d'une caisse de transport selon l'invention.

Les Figures 12 et 13 représentent une vue rapprochée d'une paroi mobile selon l'invention, montrant un vantail abattant et une porte d'accès à la caisse, selon l'invention dépendante. En Figure 12, le vantail abattant est en position ouverte, correspondant à une position possible de travail. En Figure 13, le vantail abattant est en position fermée, correspondant à une autre position de travail.

Les Figures 14A, 14B, 14C et 14D montrent des exemples non exhaustifs d'autres formes de réalisation d'une caisse de transport selon l'invention. La Figure 14A montre une caisse de transport munie d'un dispositif d'épandage pour fumiers et autres matières assimilées. La Figure 14B montre une caisse de transport munie d'un dispositif d'épandage pour engrais, sels, chaux, etc. La Figure 14C montre une caisse de transport munie d'un dispositif de projection de fourrage. La Figure 14D montre une caisse de transport munie d'une trémie dirigeant la matière déchargée dans une vis de transbordement.

L'invention est explicitée à la suite au moyen d'une description non limitative de certains éléments de détail.

### Description détaillée de l'invention

Les objectifs visés par l'invention sont atteints grâce à une caisse de transport fabriquée à partir d'une structure légère comprenant des parois latérales lisses de conception quelconque et une structure de fond ouverte composée d'un ensemble de lattes supporté par une série de traverses, elles-mêmes supportées par des longerons, lesquels peuvent faire partie du châssis porteur ou non selon que l'on conçoit la liaison de la caisse à son châssis porteur comme permanente ou non.

De préférence toutes les lattes, sinon certaines lattes, supportent sur leur face supérieure des glissières de préférence plus larges que les lattes et réalisées de préférence dans une matière synthétique souple et autolubrifiante.

La structure de fond est intégralement couverte d'un tapis réalisé dans une matière dont la souplesse autorise l'enroulement du tapis autour d'un tambour et dont la résistance est compatible avec la charge utile de la remorque augmentée de la masse d'une paroi mobile de caisse (voir plus bas) et les paramètres d'agressivité du type de charge envisagée. Ce tapis peut être réalisé d'une seule pièce ou de manière sectionnelle, l'important étant que le résultat assemblé assure la couverture étanche de la surface intégrale du fond de caisse et puisse être enroulé. La caisse de transport comporte en outre une baie de déchargement. Dans une forme préférée mais non exclusive de l'invention, cette baie est située à l'arrière par rapport au sens normal de marche du véhicule de traction et comporte un moyen d'obturation quelconque, par exemple un panneau ou caisson mobile, une porte ouvrante à un ou plusieurs battants, un volet ouvrant par un dispositif quelconque, etc.

A l'opposé de la baie de déchargement est disposée une paroi mobile qui n'est fixée que par sa base au tapis de fond et qui est disposée verticalement ou avec une inclinaison montante depuis sa base ou encore avec une combinaison de ces caractéristiques d'angle. Cette paroi mobile est pourvue d'un dispositif de guidage et de maintien. Dans une forme préférée de l'invention, ce dispositif de guidage et de maintien n'utilise pas les parois latérales de la caisse parce que celles-ci sont susceptibles de se déformer à la suite de l'agression des charges transportées et/ou des véhicules de manutention procédant au remplissage de la caisse. Néanmoins, pour assurer l'étanchéité de la paroi mobile le long des parois latérales, deux joints sont disposés le long des arêtes verticales de la paroi mobile. Ces joints sont constitués d'une matière suffisamment dure, par exemple le caoutchouc, pour résister à l'inertie et à l'abrasion de la matière transportée lorsque celle-ci est déchargée.

Une forme possible du dispositif de guidage et de maintien de la paroi mobile est constitué d'un chevalet tridimensionnel disposé sur le côté de la paroi mobile qui n'est pas exposé à la charge transportée. La base s'étend plus ou moins largement à l'avant de la paroi pour guider celle-ci sur une plus ou moins grande largeur et elle s'étend de manière plus ou moins éloignée de la paroi pour maintenir la partie supérieure de celle-ci avec un angle d'appui permettant de maintenir la paroi dans sa position constructive, et de résister à la pression exercée sur la paroi mobile par la portion de la charge transportée qui lui est contiguë.

La base du chevalet est équipée de moyens de guidage qui se déplaceront sur ou dans des glissières afin de guider le déplacement de la paroi mobile. Dans une forme d'exécution préférée permettant aussi de faciliter le déplacement de la paroi mobile, la base du chevalet est avantageusement munie d'un jeu de roulettes dont la position relative à la largeur de la paroi mobile correspond pour chaque roulette à la position d'une latte de la structure de fond de caisse. Certaines roulettes sont alors montées de préférence en sorte que leur base roule directement sur les glissières garnissant les lattes de la structure de fond lorsque la paroi mobile se déplace, position qui facilite en outre le montage d'un dispositif de rappel (voir plus loin). De préférence, ces roulettes supérieures seront du type roue à gorge en sorte qu'elles roulent sur les lattes comme sur un rail. D'autres roulettes sont montées à une hauteur inférieure en sorte que, lors du déplacement de la paroi mobile, elles roulent sous deux lattes de la structure de fond afin de guider le déplacement de la paroi, empêcher l'oscillation de la paroi mobile vers la baie de déchargement et centrer l'enroulement du tapis de fond.

Dans une forme d'exécution préférée, les lattes sous lesquelles roulent les roulettes inférieures sont pourvues, du côté du passage de l'axe de support des roulettes, d'un rebord destiné à guider la roulette parfaitement dans l'axe de la latte.

Dans une forme préférée également, les lattes de fond sont constituées de profilés en forme de U dont les plis sont en arc de cercle et elles sont disposées de manière partiellement encastrée dans les traverses de la structure de caisse, afin de maximiser la hauteur utile de caisse. Dès lors, une découpe est pratiquée dans les traverses à l'endroit du passage des roulettes inférieures et les lattes recouvrant les roulettes inférieures sont des profilés en forme de L, formant ensemble une sorte de canal de guidage.

Les roulettes en tant que telles, leur nombre et leur position ne sont pas des éléments caractérisants de l'invention. Les moyens de guidage pourraient aussi bien être constitués de patins, d'ergots ou de tout autre dispositif autorisant le glissement. Pour des remorques destinées au transport de charges lourdes, on pourrait aussi prévoir plus d'un canal de guidage et un nombre supérieur de roulettes inférieures et/ou supérieures.

De même, la liaison de la paroi mobile au tapis est réalisée suivant un dispositif quelconque, du moment que la liaison soit suffisamment solide pour ne pas être arrachée lorsque le tapis doit entraîner la paroi mobile qui subit une pression, certes faible mais néanmoins réelle, de la charge transportée.

L'extrémité opposée du tapis de fond est fixée au moyen d'un dispositif quelconque sur un tambour enrouleur positionné sous la structure de fond de caisse, légèrement en retrait de l'extrémité de la caisse située du côté de la baie de déchargement. Ce tambour enrouleur est fixé sur un arbre d'entraînement, lui même entraîné par un dispositif de puissance chargé d'entraîner la rotation du tambour dans le sens de la traction du tapis.

Le système de puissance d'entraînement du tambour enrouleur comprend un ou plusieurs engrenages entraînés ensemble ou individuellement soit par un ou plusieurs moteurs hydrauliques, soit par le système de puissance mécanique ou hydraulique du véhicule de traction. Le système de puissance choisi doit autoriser la rotation dans le sens opposé à l'enroulement, lorsque la paroi mobile et le tapis de fond sont retirés vers l'autre extrémité de la caisse pour préparer celle-ci à un nouveau chargement.

Afin de réguler la vitesse d'enroulement du tapis, le système de puissance pourra avantageusement être pourvu d'un dispositif quelconque de variation continue de la puissance.

Dans une forme préférée de l'invention, deux profilés en matière dure et auto-lubrifiante réalisent l'étanchéité de la caisse de transport aux angles formés entre le tapis de fond et les parois latérales. Ces profilés sont fixés aux parois latérales ou à la structure de fond en sorte qu'ils recouvrent les deux bords latéraux du tapis de fond sur une courte distance. Un écart vertical minimal est ménagé entre le sommet du tapis et la base des profilés afin de ne pas freiner le déplacement du tapis. Les résidus qui viendraient à s'insérer entre le tapis et les profilés latéraux s'évacueront soit avec le déplacement du tapis, soit sous l'action ou à la suite du déplacement de la paroi mobile. Au besoin, la base des arêtes verticales de la paroi mobile est munie d'un racloir, éventuellement sur ressort(s), destiné à nettoyer la face inférieure des profilés latéraux.

Avantageusement, les profilés latéraux pourront présenter une section en forme de triangle rectangle afin de favoriser le glissement des matières résiduaires vers le fond de caisse. En ce cas, la face oblique des profilés - soit l'hypoténuse de la section de profilé - sera bien entendu orientée vers le haut, les côtés opposés de leur section étant orientés vers la paroi latérale adjacente et le fond de caisse.

Dans une version préférée de l'invention, l'extrémité de la structure de fond située sous la baie de déchargement sera pourvue d'un tambour de renvoi, placé en rotation libre sur un arbre situé dans le prolongement de la structure de fond en sorte que le tapis de fond circule sans heurt ni accroc à l'angle formé par les arêtes d'extrémité de la structure de fond. Un support placé sous le tambour de renvoi comportera en outre une baguette de matériau dur mais non abrasif, destinée à racler le tapis de fond pour en évacuer tout résidu de charge transportée avant son enroulement sur le tambour.

Le dispositif de déchargement, selon l'invention, est enfin complété par un dispositif de rappel du tapis de fond, afin de ramener celui-ci, et donc aussi la paroi mobile, vers l'extrémité opposée à la baie de déchargement, après déversement de la charge transportée. Ce dispositif de rappel peut être constitué d'un treuil à un ou plusieurs câbles, d'un vérin télescopique de longueur adéquate, d'un système de crémaillère avec réglette crantée et roue dentée ou de tout autre système approprié, avantageusement localisé dans le canal de guidage des roulettes inférieures, ce qui est rendu possible par la position des roulettes supérieures.

Pour assurer l'étanchéité de la paroi mobile, les arêtes latérales de la paroi mobile sont garnies de joints réalisés dans une matière suffisamment dure, par exemple le caoutchouc, pour résister à l'inertie de la matière transportée lorsque celle-ci est déchargée. Dans le cas d'une caisse conique, ces joints seront suffisamment larges et souples pour compenser l'écartement progressif des parois latérales.

Dans une version complétée de l'invention, la partie supérieure de la paroi mobile est avantageusement conçue comme un vantail pivotant autour de sa base vers l'extérieur de la caisse afin de favoriser le chargement de la caisse par projection par dessus le véhicule de traction. Lorsque le vantail est abattu en position horizontale, la hauteur de la paroi mobile est réduite et le vantail protège l'avant de la remorque contre la chute de matière projetée.

L'invention peut encore être complétée par la réalisation d'une trappe pivotante dans la paroi mobile, destinée à accéder à l'intérieur de caisse aux fins de maintenance et d'inspection.

### Description de formes d'exécution préférées de l'invention

Dans la description qui suit, des éléments similaires dans les illustrations sont affectés dans la mesure du possible de repères numériques identiques. Toutes les dimensions décrites ou suggérées ici ne sont pas destinées à limiter la portée de l'invention, laquelle peut s'écarter de ces dimensions.

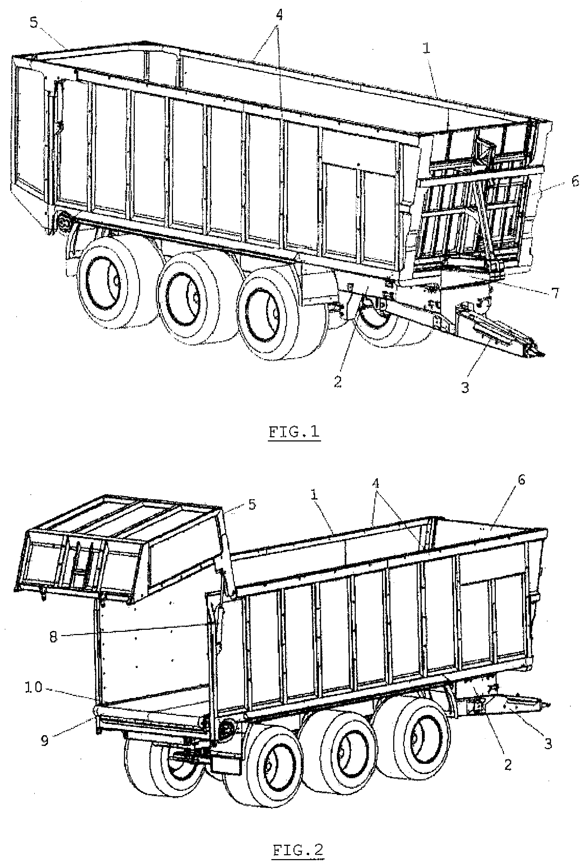

La Figure 1 illustre une phase de travail dans laquelle une remorque de transport selon l'invention, ou plus généralement un moyen de transport selon l'invention, est prêt à être chargé. Elle représente une caisse de chargement **1** d'une remorque de transport selon l'invention, dont on a également représenté le châssis porteur **2** et le timon de traction **3,** deux éléments non pertinents pour l'invention, mais indiquant le sens normal d'avancement de la remorque. La caisse de chargement **1** est composée de parois latérales **4,** d'une porte arrière **5** conçue dans cet exemple comme un caisson de fermeture pivotant à l'arrière des parois latérales **4,** d'une paroi mobile **6** située, dans la position de travail illustrée, entre les extrémités frontales des parois latérales **4,** et d'une structure de fond **7.**

La Figure 2 représente la même caisse de chargement **1** d'une remorque de transport selon l'invention, dans une phase de travail prête pour le déchargement, où la porte arrière **5** a pivoté vers le haut sous l'action des vérins de porte **8,** libérant aussi une baie de déchargement à l'arrière de la remorque. Le dégagement de la baie de déchargement sur cette Figure 2 laisse entrevoir le tapis de fond **9** disposé sur l'intégralité de la surface de la structure de fond **7** ainsi qu'un des deux joints latéraux **10** assurant l'étanchéité de la caisse de chargement **1** aux angles formés entre le tapis de fond **9** et les parois latérales **4.**

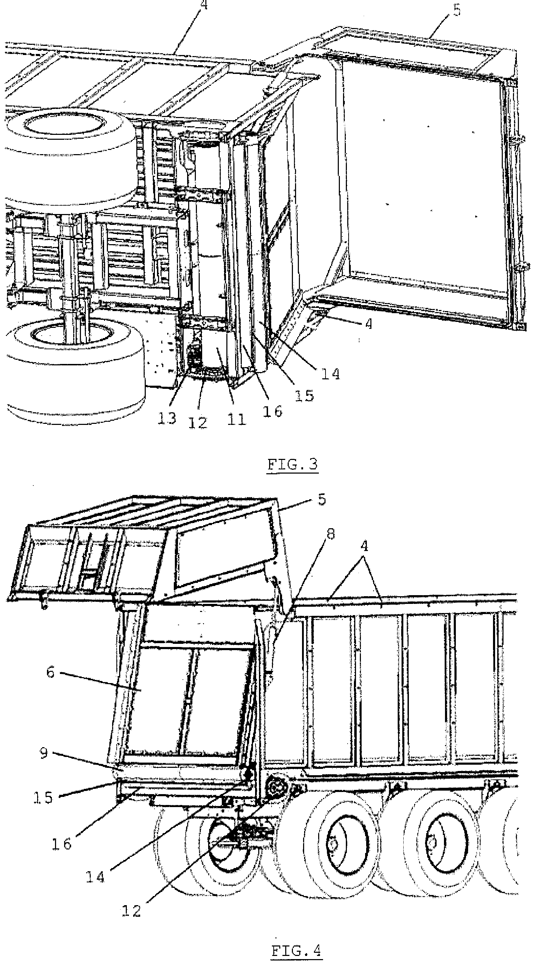

La Figure 3 représente une vue partielle du côté inférieur d'une caisse de transport **1** d'une remorque de transport selon l'invention, dans la partie située sous la baie de déchargement arrière. Le tapis de fond **9** s'enroule autour du tambour d'enroulement **11** sous l'action d'un engrenage **12** entraîné par un moteur hydraulique **13.** En pratique, l'exemple d'exécution considéré prévoit un second engrenage **12** et un second moteur hydraulique **13** du côté opposé du tambour d'enroulement **11.** Ces éléments n'ont pas été représentés pour la lisibilité de l'illustration, raison pour laquelle la Figure 3 montre une baie libre à l'autre extrémité du tambour enrouleur **11.** Le dispositif d'enroulement du tapis de fond **9** est avantageusement complété par un tambour de renvoi **14** sous lequel est disposé un racloir **15** monté sur un support **16.**

La Figure 4 donne une autre représentation du tambour de renvoi **14** du tapis de fond **9,** de l'engrenage **12** du tambour d'enroulement **11,** non visible sur cette illustration, du racloir **15** et de son support **16.**

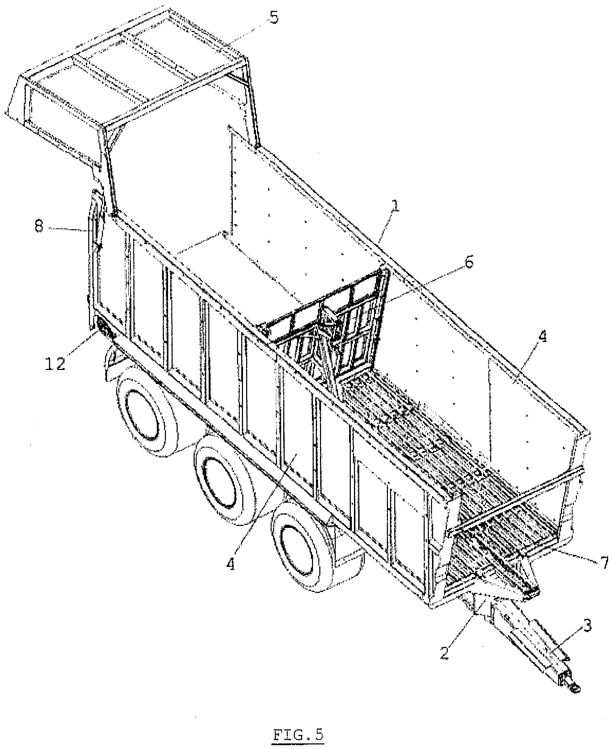

La Figure 5 représente la caisse de chargement **1** d'une remorque de transport selon l'invention vue du haut, au cours du processus de déchargement. Sous l'action du tambour d'enroulement **11,** non visible sur cette illustration puisque situé sous la caisse de chargement **1,** le tapis de fond **9** se retire vers l'arrière, attirant avec lui la paroi mobile **6,** en même temps que la matière transportée, non représentée. Ce mouvement a pour effet de déverser la matière à l'arrière de la remorque, sans que le dôme de matière transportée ne se déverse vers l'avant de la caisse de chargement **1** puisque la paroi mobile **6** se déplace aussi vers l'arrière. Par rapport à un fond mouvant sans déplacement de la paroi frontale, l'utilisateur gagnera en temps de déchargement, puisqu'il ne doit pas attendre que se décharge la matière retombée dans la partie dégagée à l'avant de la caisse pendant la rotation du fond mouvant. Par rapport aux remorques à paroi frontale poussante, la paroi mobile 6 ne subit qu'une contrainte minimale, équivalente à la pression de la matière qui s'appuie sur elle, et non au poids de l'ensemble de la matière contenue dans la caisse de chargement 1.

La Figure 5 montre en outre explicitement la structure ouverte du fond de caisse **7,** composée d'un ensemble de lattes supporté par une série de traverses, elles-mêmes supportées par des longerons, étant entendu que la composition particulière en trois éléments de cette structure ouverte ne revêt pas une importance caractérisante, les caractéristiques sous cet aspect étant l'absence complète d'une couverture quelconque (tôle, plancher en bois, ...) autre que le tapis de fond **9** et la conception particulière du dispositif de glissement du tapis de fond **9,** dispositif qui sera illustré plus loin. Cette structure ouverte permet un entretien extrêmement aisé de l'intérieur de la caisse de chargement **1** dès lors que le tapis de fond **9** aura été entièrement enroulé sur le tambour arrière **11.** Les matières résiduelles non collantes chuteront naturellement et le liquide auxiliaire, par exemple l'eau d'un nettoyeur à haute pression, suivra le même trajet.

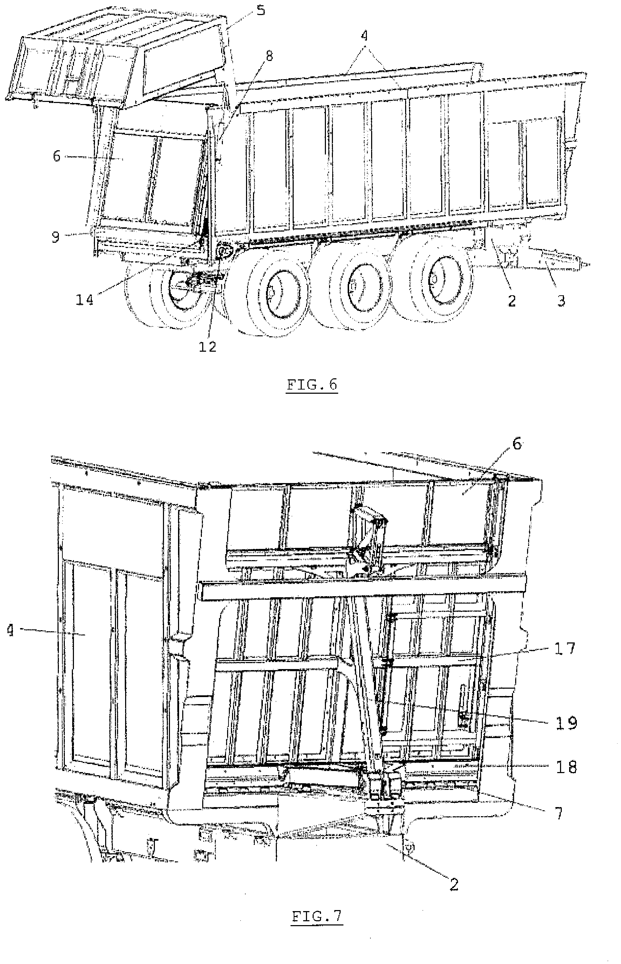

La Figure 6 illustre la fin du processus de déchargement d'une caisse de chargement **1** d'une remorque de transport selon l'invention. Le processus d'enroulement du tapis de fond **9** est terminé, la paroi mobile **6** a rejoint l'extrémité arrière, finissant de déverser toute la matière transportée.

La Figure 7 représente une vue rapprochée de la paroi mobile **6** en position par défaut, c'est-à-dire du côté de la caisse de chargement **1** de la remorque de transport selon l'invention, opposé à la baie de déchargement. Dans l'exemple d'exécution illustré, cette position se situe tout à l'avant de la caisse de chargement **1.**

La paroi mobile **6** est composée d'une cloison **17** réalisée ici à l'aide d'une structure composée par exemple de montants et traverses et couverte d'une tôle en acier inoxydable partiellement perforée pour ménager au chauffeur du véhicule de traction une visibilité sur la matière transportée. La construction de cette cloison **17** n'est pas un élément caractérisant du brevet, du moment qu'elle soit suffisamment résistante.

La paroi mobile **6** comporte en outre un dispositif de fixation **18** qui la solidarise avec le tapis de fond **9.** A nouveau, la construction de ce dispositif de fixation **18** n'est pas caractérisant, étant entendu qu'il doit être en état d'assurer durablement la traction uniforme de la paroi mobile **6** par le tapis de fond **9.**

La paroi mobile **6** comporte encore un chevalet de guidage et de maintien **19** qui, comme l'indique sa dénomination, est destiné à maintenir la paroi mobile **6** continuellement perpendiculaire aux parois latérales **4,** ce qui aura pour effet secondaire de garantir l'enroulement régulier et en ligne du tapis de fond **9,** et de maintenir la paroi mobile **6** dans l'angle de sa construction, c'est-à-dire de l'empêcher de basculer ou osciller d'avant en arrière et vice-versa sous l'effet de la pression de la charge transportée et/ou de son propre déplacement et/ou de toute autre force prévisible quelconque (vent, prise au vent, etc.).

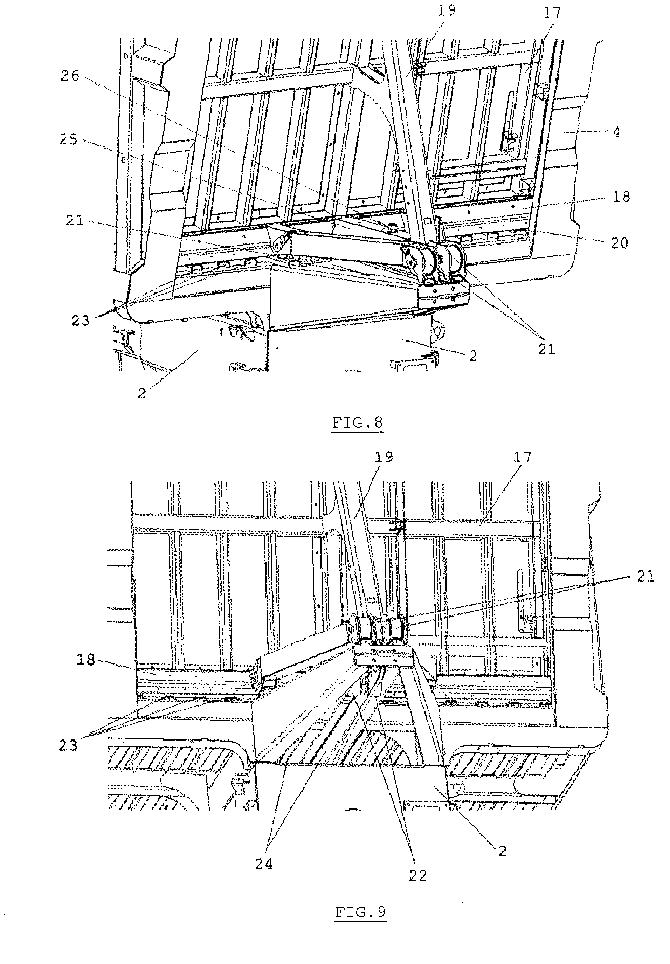

Une exécution possible du dispositif de guidage et maintien du chevalet **19** est explicitée dans les Figures 8 et 9.

En Figure 8, on distingue les glissières **20** disposées sur les lattes constituant la structure de fond de caisse **7.** Ces glissières **20** sont réalisées dans une matière synthétique autolubrifiante à sélectionner pour ses caractéristiques de glissement et de résistance à l'abrasion. Un ensemble de roulettes supérieures **21,** au nombre de quatre dans l'exemple d'exécution illustré sans que pareil nombre n'ait valeur caractérisante, est par ailleurs disposé à la base du chevalet de guidage et de maintien **19.** Ces roulettes supérieures **21** sont chacune disposées dans l'axe longitudinal d'une des glissières **20** de la structure de fond de caisse **7** et roulent sur ces glissières **20,** qui les supportent et qui les guident, lorsque le tapis de fond **9** tire la paroi mobile **6** vers la baie de déchargement. Ce dispositif combinant glissières de fond **20** et roulettes supérieures **21** a pour effet, d'une part, de réduire l'effort de traction qui s'exerce sur la paroi mobile **6** lors de son déplacement ainsi que l'effort de pression qui s'exerce sur le tapis de fond **9** lorsqu'il glisse sur la structure de fond **7** pendant son enroulement autour du tambour enrouleur **11,** et d'autre part, de guider le déplacement de la paroi mobile **6** en sorte qu'elle reste toujours perpendiculaire aux parois latérales **4** de la caisse de chargement **1** et que, partant, le tapis de fond **9** s'enroule et se déroule bien en ligne.

La Figure 9 montre en outre un jeu de roulettes inférieures **22,** au nombre de deux dans l'exemple d'exécution illustré sans que pareil nombre n'ait valeur caractérisante, structurellement fixées au chevalet **19** mais dont la position en hauteur correspond à la hauteur de l'intérieur des profilés-lattes **23** qui composent la structure de fond de caisse **7.** Les profilés-lattes **23** qui se situent de part et d'autre des roulettes inférieures **22** sont conçus de manière telle qu'ils réalisent un chemin de roulement **24** pour les roulettes inférieures **22.**

La Figure 8 montre encore un capot de protection **25** disposé au centre de la base du chevalet **19.** Ce capot de protection **25** est destiné à protéger le chemin de roulement **24** lorsque la machine est en phase de chargement et/ou de transport : on évite ainsi que de la matière ne se dépose à l'endroit où devront passer les roulettes supérieures **21** centrales et les roulettes inférieures **22** en début de phase de déchargement. Le capot de protection **25** sert aussi à la fixation des roulettes inférieures **22,** fixation complétée par un écrou de réglage **26** permettant d'ajuster la position verticale des roulettes inférieures **22** par rapport à la hauteur du chemin de roulement **24.**

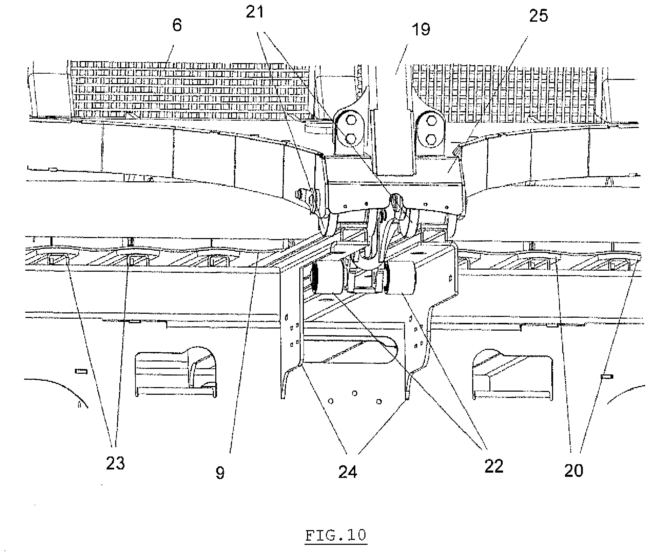

La figure 10 montre le dispositif détaillé de déplacement du tapis de fond **9** et des roulettes supérieures **21** et inférieures **22** associées à la paroi mobile **6** le long des profilés-lattes ou longerons **23** du fond de caisse **7,** lesquels font office de surface de glissement ou sont, de préférence, surmontés de glissières **20** en matière synthétique, par exemple. De préférence, ces glissières et longerons **23** seront prévus en nylon, de préférence encore de type Ertalon®, disposant ainsi d'une certaine souplesse. Encore avantageusement, les longerons **23** en contact avec le tapis de fond seront surmontés d'une partie plate **20** en Ertalon® souple, plus large que le longeron **23** lui-même qui la supporte. Cette partie supérieure **20** peut donc fléchir sur ses bords en cas de choc.

De manière avantageuse, les profilés-lattes **23** sont constitués de profilés dont la coupe est similaire à un fer à cheval (les jonctions entre leur partie supérieure et leurs parties verticales ou quasi verticales sont arrondies) et les glissières **20** sont plus larges que les profilés-lattes **23.**

Cette combinaison avantageuse permet le fléchissement souple de la glissière **20** sous l'effet d'un choc (par exemple au chargement de la matière) ou de la masse transportée, sans risque de fêlure ou bris de la glissière **20** sur les angles des profilés-lattes **23,** puisque ceux-ci sont arrondis.

En outre, les roulettes supérieures **21** sont avantageusement du type roue à gorge avec une section centrale de largeur tout juste supérieure à la largeur des glissières **20** sur lesquelles elles roulent et de diamètre inférieur à celui des sections extérieures qui l'entourent. Ce dessin permet aux roulettes supérieures **21** de rouler sur les glissières **20** comme sur un rail, ce qui est en outre avantagé par la combinaison citée ci-avant avec une glissière **20** plus large que le profilé-latte **23 :** non seulement la roulette supérieure **21** ne frotte pas sur le profilé-latte **23,** mais en outre elle est guidée sur une plus grande largeur, à savoir celle de la glissière **20.**

L'homme de l'art aura immédiatement compris que le même effet peut être également obtenu en disposant la structure de glissement des roulettes sous les profilés-lattes **23,** voire dans ou sous la structure de fond **7,** ce qui constituerait un autre mode d'exécution de l'invention.

Les combinaisons décrites ci-avant procurent ainsi les avantages suivants, clairement illustrés en Figure 10 :
- un guidage précis de la paroi mobile **6** qui reste parfaitement perpendiculaire aux parois latérales **4,** garantissant un enroulement parfait du tapis de fond **9 ;**
- un bon glissement du tapis de fond **9** et des roulettes **21, 22,** d'où une diminution de la puissance de traction nécessaire à l'enroulement de ce dernier ;
- un bon amortissement par exemple lors de la chute de matières au chargement, comme par exemple des pommes de terre, grâce à la souplesse du tapis de fond **9** combinée aux glissières **20,** qui peuvent fléchir en cas de choc ;
- une bonne protection du tapis, grâce aux caractéristiques de glissement et de souplesse de la combinaison des profilés-lattes 23 et des glissières **20.**

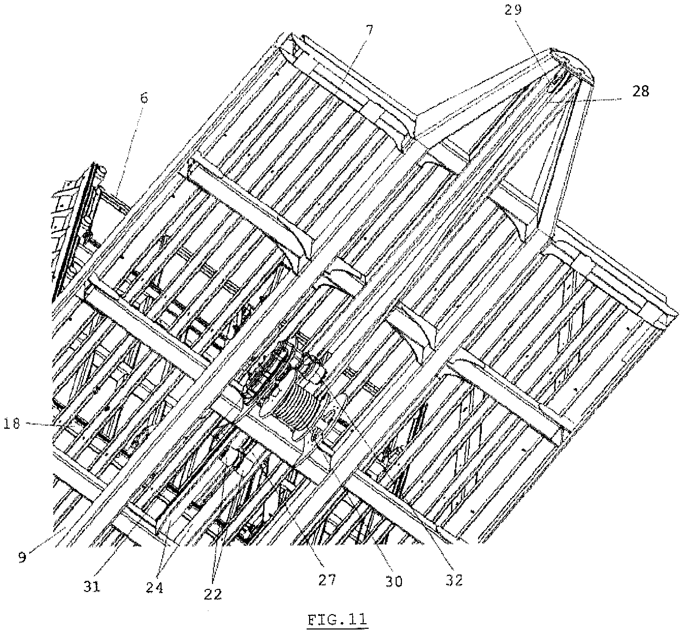

La Figure 11 montre la face inférieure de la partie avant de la structure de fond de caisse **7** pour illustrer un dispositif de rappel possible du tapis de fond **9.** Sur la fixation des roulettes inférieures **22** au chevalet de guidage et maintien **19,** un axe **27** lie la paroi mobile **6** à un câble **28.** Ce câble **28** s'étend dans le chemin de roulement **24** jusqu'à une poulie **29** fixée à l'intérieur de la pointe de structure de fond de caisse **7,** avant de revenir sous la structure de fond de caisse **7** pour s'enrouler autour d'un tambour de treuil **30** fixé sous le fond de caisse **7.** Ce treuil **30** est pourvu d'un engrenage latéral **31** avec roue libre dans le sens du déroulement du câble **28,** un moteur hydraulique **32** permettant quant à lui d'entraîner le treuil **30** pour enrouler le câble **28.** L'homme de l'art aura rapidement compris que le déroulement du câble **28** s'effectue librement lorsque le tapis de fond **9** est enroulé sur le tambour **11** aux fins de décharger la caisse **1,** alors que l'enroulement du câble **28** au moyen du treuil **30** permet de ramener le tapis de fond **9,** et donc la paroi mobile **6,** à l'opposé de la baie de déchargement.

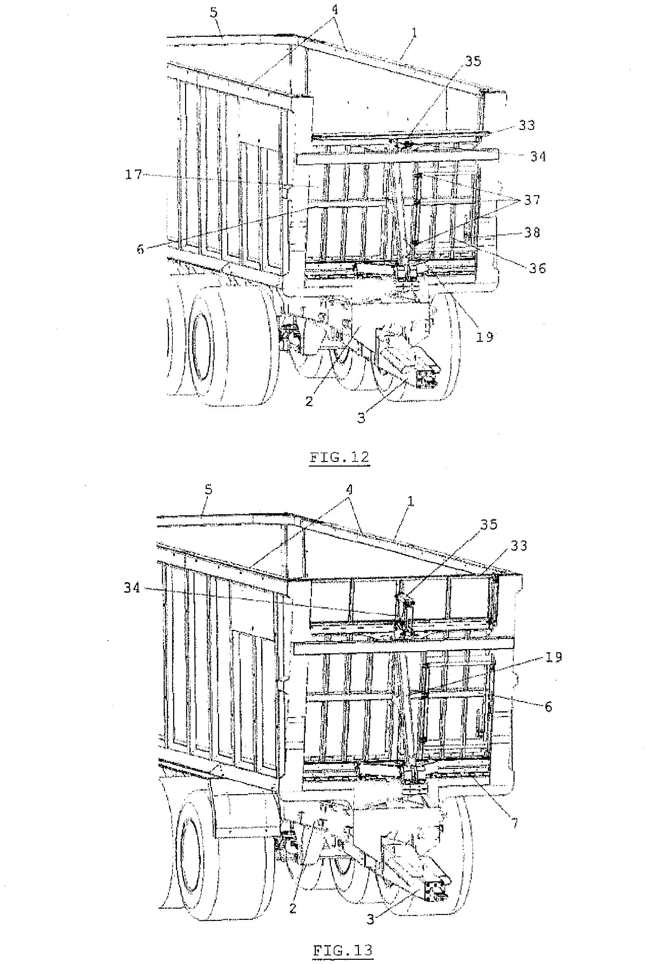

Les Figures 12 et 13 illustrent la paroi mobile d'une caisse de chargement selon l'invention, complétée par un vantail supérieur rabattable **33** et une porte d'accès **36** à l'intérieur de la caisse de chargement **1.** La Figure 11 illustre une situation adaptée au chargement par soufflage d'un engin de récolte par l'avant de la remorque : le vantail **33** est en position ouverte. En Figure 12, le vantail **33** est en position fermée.

Le vantail **33** est commandé grâce à un moyen de puissance quelconque illustré ici par vérin hydraulique **34** qui actionne un compas **35** liant le chevalet de guidage et maintien **19** et le vantail **33 :** pour fermer, le vérin **34** est rentré, ce qui a pour effet d'écarter le compas **35** et, partant de relever le vantail **33 ;** à l'inverse, lorsque le vérin **34** est allongé, le compas **35** s'aplatit, ce qui a pour effet d'abattre le vantail **33.**

La porte d'accès **36** est manipulable à la main. Elle est encastrée dans la cloison **17** de la paroi mobile **6** au moyen de charnières **37** et d'un dispositif de verrouillage **38** d'accès aisé. Pour des raisons de sécurité suivant la hauteur du châssis, il y aura lieu de pourvoir la remorque d'une échelle d'accès, laquelle n'est pas représentée ici.

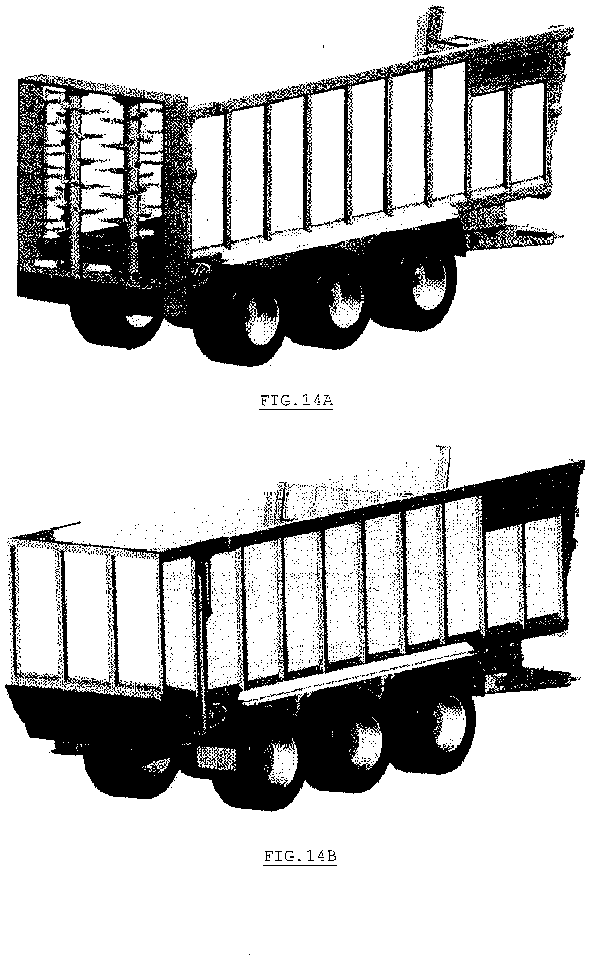

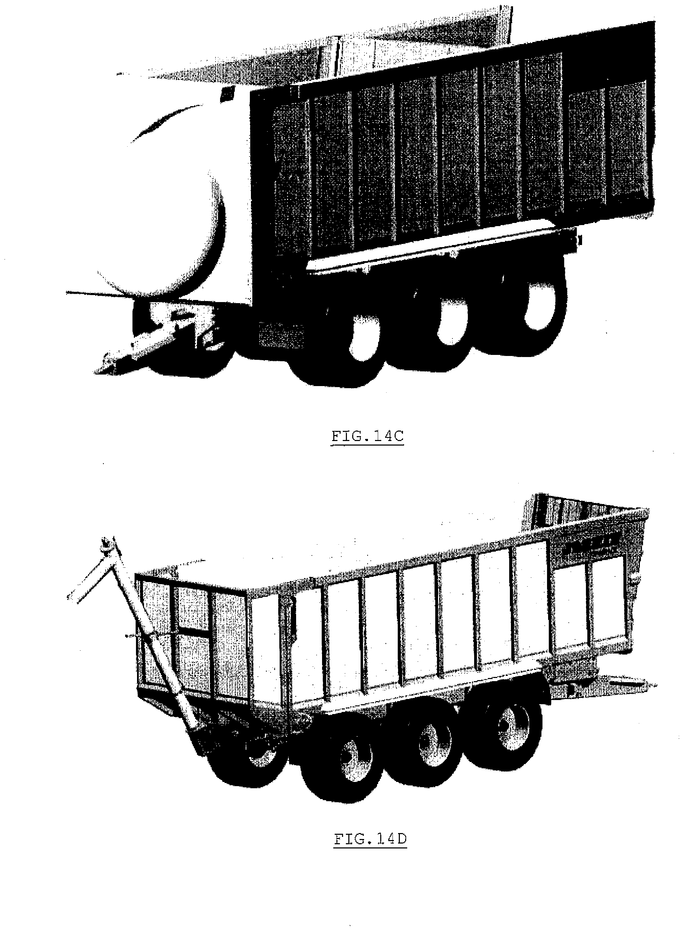

En Figure 14, on a illustré d'autres exemples de réalisation de l'invention, représentant respectivement :
- en Figure 14A, une application dans le cas d'un épandeur de fumier;
- en Figure 14B, une application dans le cas d'un épandeur à plateaux pour engrais, sel, sable, chaux ou autre matière à structure granuleuse;
- en Figure 14C, une application dans le cas d'une remorque distributrice de fourrage avec turbine de déchiquetage et projection à l'avant de la remorque. On notera dans ce cas-ci la présence d'une caisse « inversée » : la cloison mobile se trouve à l'arrière en position de chargement et le tapis de fond est enroulé à l'avant, tirant ainsi la matière et la paroi mobile vers la turbine frontale ;
- en Figure 14D, une application dans le cas d'un remorque de transbordement équipée d'une trémie arrière dirigeant la matière déversée vers une vis sans fin qui la transfère vers un autre engin.

Ces exemples ne sont nullement limitatifs : ils peuvent être étendus aussi loin que l'imagination de l'homme peut adjoindre un ou plusieurs accessoires au dispositif de déchargement.

Nonobstant le fait que la présente invention a été exposée au moyen d'une description détaillée dans laquelle différentes variantes d'exécution et différents aspects de l'invention ont été explicités, l'homme de l'art verra que la portée complète de l'invention n'est nullement limitée aux exemples présentés ici. L'invention a une portée qui est proportionnelle aux revendications du présent brevet, incluant tous éléments ou aspects qui seraient considérés comme équivalents à ceux exposés dans les revendications principales ou dépendantes.

### Liste des repères

- 1.: Caisse de chargement
- 2.: Châssis
- 3.: Timon
- 4.: Parois latérales
- 5.: Porte arrière
- 6.: Paroi mobile
- 7.: Structure de fond de caisse
- 8.: Vérins de porte arrière
- 9.: Tapis de fond
- 10.: Joints latéraux
- 11.: Tambour d'enroulement
- 12.: Engrenage de tambour
- 13.: Moteur hydraulique
- 14.: Tambour de renvoi
- 15.: Racloir
- 16.: Support de racloir
- 17.: Cloison
- 18.: Dispositif de fixation au tapis
- 19.: Chevalet de guidage et maintien
- 20.: Glissières de fond de caisse
- 21.: Roulettes supérieures
- 22.: Roulettes inférieures
- 23.: Profilés-lattes
- 24.: Chemin de roulement
- 25.: Capot de protection du chemin de roulement
- 26.: Écrou de réglage des roulettes inférieures
- 27.: Axe de fixation câble
- 28.: Câble
- 29.: Poulie
- 30.: Treuil
- 31.: Engrenage
- 32.: Moteur hydraulique
- 33.: Vantail rabattable
- 34.: Vérin de vantail
- 35.: Compas de commande de vantail
- 36.: Porte d'accès
- 37.: Charnières
- 38.: Verrou

## Revendications

1. Dispositif de déchargement intégrable à un véhicule de transport principalement destiné aux matières en vrac, comprenant une caisse de chargement (1), une structure de fond de caisse (7), des parois latérales (4), une baie de déchargement optionnellement munie d'un dispositif obturateur (5) et mettant en oeuvre :
- une paroi mobile rigide (6), perpendiculaire aux parois latérales (4) et apte à se déplacer, lors du déchargement, d'une extrémité de la caisse opposée à la baie de déchargement vers cette dernière ;
- un tapis de fond (9) essentiellement hermétique, uniforme, en matière souple (9) et de longueur inférieure au double de la longueur utile comprise entre la baie de déchargement et ladite extrémité opposée ;
- une première extrémité du tapis de fond (9) opposée à la baie de déchargement étant solidaire de la paroi mobile (6), une seconde extrémité de celui-ci étant attachée à un tambour enrouleur (11) disposé sous la baie de déchargement, le tambour enrouleur (11) étant entraîné par un système de puissance (13) permettant un enroulement réversible du tapis de fond (9) avec déplacement concomitant de la paroi mobile (6) qui lui est solidaire, entre ladite extrémité opposée et la baie de déchargement, un dispositif de rappel de la paroi mobile (6) et du tapis de fond (9) permettant en outre de ramener ensuite ceux-ci vers ladite extrémité opposée ;
**caractérisé en ce qu'**il comprend un chevalet tridimensionnel (19) de guidage et maintien de la paroi mobile (6), disposé sur le côté de la paroi mobile (6) non exposé à la charge transportée, ledit chevalet (19) comportant une base s'écartant sur une certaine distance en direction opposée à la paroi mobile (6), s'étendant à la base de la paroi mobile (6) sur une certaine largeur et muni de moyens de guidage (20, 21, 22, 23, 24) sur la structure de fond de caisse (7), lesdits moyens de guidage comprenant une pluralité de roulettes (21, 22), patins ou ergots, le tapis de fond et lesdits moyens de guidage se déplaçant sur la surface de glissement constituée par le fond de caisse (7).

2. Dispositif de déchargement selon la revendication 1, **caractérisé en ce que** la structure de fond de caisse (7) est une structure à claire-voie ne comportant pas de couverture autre que le tapis de fond (9) et comprenant, dans sa partie supérieure, des lattes longitudinales (23) faisant office de surface de glissement.

3. Dispositif de déchargement selon la revendication 1 ou 2, **caractérisé en ce que** les lattes (23) de fond de caisse (7) supportent des glissières (20), réalisées en matière synthétique autolubrifiante, sur lesquelles peut se déplacer le tapis de fond (9) et les roulettes (21), patins ou ergots.

4. Dispositif de déchargement selon la revendication 2 ou 3, **caractérisé en ce que** la surface de glissement du fond de caisse (7) est constituée de lattes profilées (23) dont les plis sont en arc de cercle et de glissières (20) souples d'une largeur supérieure aux lattes (23).

5. Dispositif de déchargement selon la revendication 3, **caractérisé en ce que** la matière synthétique autolubrifiante des glissières (20) est le nylon, de préférence de type Ertalon®.

6. Dispositif de déchargement selon la revendication 3, **caractérisé en ce que** les roulettes (21) sont en position supérieure par rapport à la structure de fond de caisse (7) et se déplacent sur les glissières synthétiques supérieures (20).

7. Dispositif de déchargement selon la revendication 1, **caractérisé en ce que** le chevalet tridimensionnel (19) s'étend de manière éloignée de la paroi mobile (6) pour maintenir la partie supérieure de celle-ci avec un angle d'appui.

8. Dispositif de déchargement (1) selon la revendication 1, **caractérisé en ce que** l'extrémité de la structure de fond de caisse (7) se trouvant sous la baie de déchargement est pourvue d'un tambour de renvoi (14) placé en rotation libre sur un arbre situé dans le prolongement de ladite structure de fond (7), en sorte que le tapis de fond (9) circule à l'angle formé par les arêtes d'extrémité de ladite structure de fond (7), un support placé sous le tambour de renvoi comportant un racloir (15, 16) destiné à évacuer tout résidu de charge transportée par le tapis de fond (9) avant son enroulement sur le tambour (11).

9. Dispositif de déchargement selon la revendication 1, **caractérisé en ce que** la paroi mobile (6) est garnie de joints synthétiques verticaux semi-souples assurant l'étanchéité de la caisse le long des parois latérales (4), quelle que soit la position de la paroi mobile (6), y compris si l'écart des parois latérales (4) est irrégulier ou diffère sur la longueur de la caisse (1).

10. Dispositif de déchargement selon la revendication 1, **caractérisé en ce qu'**une section supérieure (33) de la paroi mobile (6) est montée pivotante sous forme d'un vantail autour de charnières fixées à cette dernière.

11. Dispositif de déchargement selon la revendication 1, **caractérisé en ce qu'**une ouverture d'accès obturée par un panneau (36) pivotant, coulissant ou déposable, est pratiquée dans la paroi mobile (6) ou l'une des parois latérales (4).

12. Dispositif de déchargement selon la revendication 1, **caractérisé en ce que** la baie de déchargement est complétée par un dispositif de déchargement secondaire spécifique de la matière transportée, de préférence un système de rouleaux, avec optionnellement assiettes d'épandage, pour la distribution de fumiers, sables, chaux ou autre matière à structure granuleuse, un convoyeur de transbordement pour les récoltes de produits agricoles ou une turbine de projection pour la distribution de fourrage ou déchets verts compostés.

13. Dispositif de déchargement selon la revendication 1, **caractérisé en ce que** le tapis de fond (9) est réalisé d'une seule pièce ou de manière sectionnelle.

14. Dispositif de déchargement selon la revendication 1, **caractérisé en ce que** deux profilés latéraux (10) en matière dure et autolubrifiante réalisent l'étanchéité de la caisse aux angles formés entre le tapis de fond (9) et chacune des parois latérales (4).

15. Dispositif de déchargement selon la revendication 14, **caractérisé en ce que** la base des arêtes verticales de la paroi mobile (6) est muni d'un racloir destiné à nettoyer la face inférieure des profilés latéraux (10).

16. Dispositif de déchargement selon la revendication 1, **caractérisée en ce que** le dispositif de rappel de la paroi mobile (6) et du tapis de fond (9) comprend un treuil (30) à un ou plusieurs câbles (28), un vérin télescopique ou un système de crémaillère avec réglette crantée et roue dentée.

17. Dispositif de déchargement d'une caisse de chargement, principalement destinée aux matières en vrac, selon l'une quelconque des revendications précédentes, **caractérisé en ce que** le déchargement se produit lorsque le système de puissance (13) enroule le tapis de fond (9) sur le tambour enrouleur (11), ledit tapis (9) entraînant avec lui la paroi mobile (6) qui lui est solidaire et qui accompagne de manière concomitante les matières vers la baie de déchargement ou un dispositif de déchargement secondaire complétant le dispositif d'obturation de celle-ci.

18. Dispositif de déchargement selon la revendication 17, **caractérisé en ce que** l'enroulement du tapis de fond (9) est successivement actionné et stoppé au moyen d'un dispositif de commutation du système de puissance (13), la vitesse et la distance d'enroulement du tapis de fond (9) étant réglés de manière fine et régulière au moyen du dispositif de régulation du système de puissance (13).
